# EUROPÄISCHE PATENTANMELDUNG

(11) **EP 3 939 433 A1**
(43) Veröffentlichungstag der Anmeldung: **19.01.2022**
(21) Anmeldenummer: 21189606.3
(22) Anmeldetag: 06.03.2019
(51) Int. Cl.: A23B 4/30, B05B 7/00, B05B 7/04, B05B 7/08, B05B 7/14, B05B 7/24, B05B 12/12, B05B 13/02, A23P 20/12

(54) **VERFAHREN UND VORRICHTUNG ZUM AUFTRAGEN VON MASSEN AUF LEBENSMITTEL**

(30) Priorität: 06.03.2018 DE 102018203339
(62) Teilanmeldung aus: 19160980.9
(71) Anmelder: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(57) **Zusammenfassung**

Die Erfindung beschreibt eine Vorrichtung zur Verwendung als Auftragvorrichtung für Massen auf Lebensmittel und ein damit durchführbares Verfahren zur Herstellung von beschichteten Lebensmitteln durch Auftragen einer Masse auf Lebensmittel, mit einem Strömungskanal, an dessen Einlassende eine Zuführleitung für die Masse angeordnet ist, deren Mündung in einem Bereich festgelegt ist, der sich von einem Abstand vor dem Einlassende bis in den Strömungskanal erstreckt.

## Beschreibung

Die vorliegende Erfindung betrifft eine Vorrichtung und ein Verfahren zum Auftragen von Massen, die pulverförmig, bevorzugt flüssig mit darin verteilten Stücken sind, auf Lebensmittel. Die flüssigen Massen können wässrig oder ölig sein oder eine Emulsion. Die flüssigen Massen können eine Konsistenz aufweisen, die bei der Temperatur, bei der das Verfahren durchgeführt wird, dünnflüssig wie Wasser bis zu breiartig ist. Die Massen enthalten bevorzugt darin enthaltene Stücke, z.B. einer Größe von 0,5 mm oder von 2 mm bis zu 10 mm, bevorzugter bis 5 oder bis 3 mm in der größten Ausdehnung. Zum Auftragen auf Lebensmittel können die Stücke z.B. Gewürze, z.B. Kräuter, ganze Pfefferkörner, grob gemahlener Pfeffer, Gemüsestücke, Fleischstücke oder bei 5 bis 30°C festes Fett, pflanzlich oder tierisch, sein. Die Vorrichtung und das Verfahren sind eingerichtet, nacheinander oder gleichzeitig zumindest zwei verschiedene Massen getrennt aufzutragen, jeweils auf die gleiche oder auf gegenüberliegende Seiten des Lebensmittels, um ein mit der Masse beschichtetes Lebensmittel herzustellen.

### Stand der Technik

Die EP 0444767 A2 beschreibt eine schlitzförmige Düse, deren Querschnitt sich von ihrem Einlass zu einem Bereich des kleinsten Querschnitts verjüngt und anschließend wieder aufweitet. Die Düse wird zum Auftragen flüssigen Metalls eingesetzt.

Die US 2,988,139 A zeigt eine Düse zum Aufsprühen mit rundem Querschnitt, der sich von einer Einlassöffnung verjüngt und anschließend verbreitert, wobei die Düse an ihrem Einlassende von einer ringförmigen Auslassöffnung mit einem Treibgas angeströmt wird.

Die US 4,341,347 A beschreibt eine Düse, deren Querschnitt sich von ihrem Einlassende zum Auslassende zunächst verjüngt und anschließend aufweitet, wobei die endständige Einlassöffnung nicht zur Umgebung offen ist, sondern überdeckt ist und dort Treibgas zugeführt wird.

Die FR 2617273 A1 beschreibt eine Schneekanone mit einem Rohrstück, an dessen Einlassende Treibgas zugeführt wird und Wasser mit einer in verschiedenen Stellungen festlegbaren Leitung in das Einlassende gespritzt werden kann.

Die WOOO/32051 beschreibt das Besprühen von Geflügelteilen mit flüssigen oder pulverförmigen Zusatzstoffen mittels eines Gasstrahls mit nicht näher beschriebenen Düsen, auch mit elektrostatischer Aufladung von 10 ― 40 kV.

Die US 3,436,230 beschreibt Düsen, mit denen ohne Einstechen Flüssigkeit mit so hohem Druck in Fleisch gespritzt werden kann, dass dessen Oberfläche nicht beschädigt werden soll, z.B. mit Geschwindigkeiten von ca. 180 m/s.

### Aufgabe der Erfindung

Der Erfindung stellt sich die Aufgabe, eine alternative Vorrichtung und ein damit durchführbares Verfahren zum Auftragen von Massen auf Lebensmittel bereitzustellen, die insbesondere geeignet sind, flüssige Massen, die Stücke enthalten, berührungslos aufzutragen, insbesondere mittels eines Gasstroms aufzutragen.

### Beschreibung der Erfindung

Die Erfindung löst die Aufgabe mit den Merkmalen der Ansprüche und stellt insbesondere eine Vorrichtung zur Verwendung als Auftragvorrichtung für Massen auf Lebensmittel und ein damit durchführbares Verfahren zur Herstellung von beschichteten Lebensmitteln durch Auftragen einer Masse auf Lebensmittel bereit, mit einem Strömungskanal, an dessen Einlassende eine Zuführleitung für die Masse angeordnet ist, deren Mündung in einem Bereich festgelegt ist, der sich von einem Abstand vor dem Einlassende bis in den Strömungskanal erstreckt.

In einer Ausführungsform, die vorteilhafterweise einfach herzustellen und einfach im Verfahren zu betreiben ist, weist die Vorrichtung einen Strömungskanal auf, der mit zumindest einem Druckgasanschluss versehen ist, und eine Zuführleitung, die, bevorzugt koaxial zum Strömungskanal, in einem Bereich mündet, in dem der Strömungskanal Unterdruck erzeugt, wobei sich dieser Bereich von einem Abstand vor der Eintrittsöffnung bis innerhalb des Strömungskanals erstreckt, oder besteht daraus. Dabei kann die Zuführleitung mit ihrem gegenüberliegenden offenen Ende in einen Behälter für die Masse ragen und bevorzugt keine Fördereinrichtung aufweisen. Dabei kann die Vorrichtung unterhalb einer Transporteinrichtung angeordnet sein, z.B. mit der Längsachse des Strömungskanals vertikal und dessen Austrittsöffnung oben. In dieser Ausführungsform ist die Zuführleitung festgelegt und die Anordnung ihrer Mündung in einem Bereich, in dem der Strömungskanal Vakuum erzeugt, erlaubt das selbsttätige Ansaugen der Masse. Die Zuführleitung kann in einem Abstand zur Längsmittelachse des Strömungskanals angeordnet sein oder koaxial zum Strömungskanal. Dabei kann die Zuführleitung in einem Winkel oder parallel zur Längsmittelachse des Strömungskanals angeordnet sein. Bevorzugt ist die Mündung der Zuführleitung koaxial zum Strömungskanal angeordnet. Dabei kann der Behälter für die Masse ein oben offener Behälter sein, der unterhalb der Transporteinrichtung angeordnet ist, optional so, dass aus Richtung der Transporteinrichtung nach unten fallende Masse in den Behälter fällt.

Optional ist die Zuführleitung verschieblich und/oder schwenkbar geführt und in einer Stellung festlegbar, so dass ihre Mündung in einem Bereich anordnbar ist, der sich von einem Abstand vor dem Einlassende bis in den Strömungskanal erstreckt. Weiter optional ist die Mündung der Zuführleitung koaxial zur Längsmittelachse des Strömungskanals angeordnet.

Die Zuführleitung ist optional mit einem Vorratsbehälter für eine Masse verbunden, optional mit zumindest zwei Vorratsbehältern mit jeweils einer Zuleitung und einem Ventil, das zwischen den Vorratsbehältern umschalten und einen Vorratsbehälter mit der Zuführleitung verbinden kann, verbunden. Jeder Vorratsbehälter kann mittels einer Leitung mit der Zuführleitung verbunden sein, die in Bereich mündet, der sich von einem Abstand vor der Einlassöffnung des Strömungskanals bis innerhalb des Strömungskanals erstreckt.

Bevorzugt ist in jeder Leitung und/oder in der Zuführleitung eine gesteuerte Fördereinrichtung zur Förderung der Masse zur Mündung der Zuführleitung angeordnet. Für flüssige Massen ist die Fördereinrichtung z.B. eine Pumpe oder Verdrängerpumpe, bevorzugt eine Kolben- oder Exzenterschneckenpumpe, Schlauchpumpe oder Kreisel-, Schnecken -, Membran-, Impeller-, Drehkolben-, Drehschieber-, Kreiskolben- oder Zahnradpumpe. Als eine alternative Fördereinrichtung kann ein Vorratsbehälter unter Druck gesetzt werden, z.B. durch Beaufschlagen des Vorratsbehälters mit Druckgas, z.B. Druckluft mittels eines Druckluftanschlusses, bevorzugt von konstantem Druck, oder durch Ausbilden einer Behälterwand, z.B. des Deckels, als ein gegen das Innenvolumen des Vorratsbehälters belasteter Kolben. Insbesondere in Ausführungsformen, in denen die Fördereinrichtung dadurch gebildet ist, dass der Vorratsbehälter mit Druck beaufschlagt ist, ist bevorzugt ein steuerbares Ventil in der Zuführleitung angeordnet. Ein solches Ventil in der Zuführleitung kann z.B. abhängig von der Position einer Transporteinrichtung gesteuert sein, an der Lebensmittel in einem Abstand vor der Austrittsöffnung des Strömungskanals vorbei transportiert werden, oder abhängig vom Signal eines Detektors für die Anwesenheit eines an der Transporteinrichtung angeordneten Lebensmittels vor der Austrittsöffnung des Strömungskanals. Ein solcher Detektor kann eine Photozelle, bevorzugt eine Kamera sein.

Für pulverförmige Massen ist die Fördereinrichtung z.B. eine Förderschnecke, eine Schütte oder ein Gebläse.

Optional ist in der Zuführleitung für die Masse keine Fördereinrichtung angeordnet und optional bewirkt oder unterstützt allein der Strömungskanal die Förderung der Masse an die Mündung der Zuführleitung, insbesondere durch den vom Strömungskanal erzeugten Unterdruck, der auf die Mündung der Zuführleitung wirkt. Mit oder ohne Fördereinrichtung in der Zuführleitung kann der vom Strömungskanal erzeugte Unterdruck, der auf die Mündung der Zuführleitung wirkt, die Förderung der Masse durch die Zuführleitung bewirken oder unterstützen. Weiter optional ist ein Vorratsbehälter, bevorzugt alle Vorratsbehälter, für Masse oberhalb der Mündung der Zuführleitung angeordnet, so dass die Masse durch die Schwerkraft zur Mündung gefördert wird. Dabei ist in jeder Ausführungsform bevorzugt ein gesteuertes Ventil in der Zuführleitung angeordnet. Alternativ weist die Zuführleitung kein Ventil auf.

Optional ist die Fördereinrichtung oder die Zuführleitung mit einem Durchflussmengenmesser versehen.

Die Zuführleitung ist optional relativ zum Strömungskanal verschieblich geführt und in einer Stellung festlegbar, bevorzugt koaxial zur Längsmittelachse des Strömungskanals angeordnet und entlang dieser Längsmittelachse verschieblich geführt, insbesondere relativ zum Einlassende des Strömungskanals.

Optional ist die Zuführleitung in einem Winkel zur Längsmittelachse des Strömungskanals angeordnet und festgelegt oder in einen Winkel zur Längsmittelachse des Strömungskanals schwenkbar und in einer Stellung festlegbar. Optional ist die Zuführleitung, parallel oder in einem Winkel zur Längsmittelachse des Strömungskanals angeordnet und festgelegt und/oder die Zuführleitung ist in einen Winkel schwenkbar zur Längsmittelachse des Strömungskanals, in einer oder in zwei Dimensionen, die senkrecht zur Längsmittelachse stehen, verschieblich und/oder schwenkbar geführt und bevorzugt in einer Stellung festlegbar.

Eine zur Längsmittelachse verschiebliche Zuführleitung, z.B. mittels eines oder zweier Linearführungen, die entlang einer bzw. zweier Achsen senkrecht zur Längsmittelachse des Strömungskanals eine Führung für die Zuführleitung bilden, mittels derer die Zuführleitung verschieblich geführt ist, erlaubt die in verschiedene Stellungen gesteuerte exzentrische Zuführung der Masse in den Strömungskanal. Auf diese Weise ist die Vorrichtung eingerichtet, die Verteilung der Masse gesteuert zu variieren, z.B. die Verteilung der stückigen Bestandteile gesteuert zu beeinflussen. Die Zuführleitung kann z.B. mittels zumindest einer Einstellschraube oder zumindest eines Linearantriebs relativ zum Strömungskanal verschieblich geführt sein.

Generell kann die Zuführleitung in Ausführungsformen, in denen sie festgelegt ist bzw. nicht verschieblich und/oder schwenkbar ist, mit ihrer Mündung in einer Stellung festgelegt sein, die mit Bezug auf die Ausführungsform beschrieben ist, in der die Zuführleitung veschieblich und/oder schwenkbar und bevorzugt in einer Stellung festlegbar ist. Die Zuführleitung kann z.B. über einen Bereich relativ zum Strömungskanal verschieblich oder innerhalb eines Bereichs festgelegt sein, der sich von einer Stellung, in der die Mündung der Zuführleitung in einem Abstand von der Ebene der Einlassöffnung bzw. vom Einlassende außerhalb des Strömungskanals angeordnet ist, bis in eine Stellung erstreckt, in der die Mündung der Zuführleitung innerhalb des Strömungskanals angeordnet ist, z.B. bis in eine Stellung, in der die Mündung bis in den Abschnitt des Strömungskanals mit dem geringsten Innendurchmesser oder darüber hinaus in den Strömungskanal ragt. Optional kann die Zuführleitung verschieblich sein, so dass ihre Mündung in einem Bereich angeordnet ist, der sich von einem Abstand von der Ebene der Einlassöffnung außerhalb des Strömungskanals über die Ebene der Einlassöffnung z.B. bis zu dem Abschnitt des Strömungskanals mit dem geringsten Innendurchmesser erstreckt, oder z.B. in einem Bereich, der sich von der Ebene der Einlassöffnung bis zur Zuführöffnung für Druckgas, die am oder im Strömungskanal angeordnet ist, erstreckt, oder in einem Bereich, der sich von der Zuführöffnung für Druckgas bis zur Austrittsöffnung des Strömungskanals erstreckt. Auch in Ausführungsformen des Strömungskanals, in denen dieser einen über seine Länge konstanten Durchmesser oder einen von der Einlassöffnung zur Austrittsöffnung zunehmenden Durchmesser aufweist, kann die Zuführleitung verschieblich sein, dass ihre Mündung in einem Bereich positionierbar ist, der sich von einem Abstand vor der Einlassöffnung bis zur Zuführöffnung für Druckgas in dem Strömungskanal erstreckt, oder in einem Bereich positionierbar ist, der sich von der Zuführöffnung für Druckgas bis zur Austrittsöffnung erstreckt.

Optional kann die Stellung der Mündung der Zuführleitung relativ zum Strömungskanal abhängig z.B. vom Druck und/oder von der Geschwindigkeit und/oder dem Massestrom der aus der Zuführleitung austretenden Masse oder von der Förderrate einer Fördereinrichtung gesteuert sein, die der Druck sein kann, mit dem der Vorratsbehälter beaufschlagt ist, oder abhängig von der Förderleistung einer in der Zuführleitung angeordneten Pumpe und/oder abhängig von der Stellung eines in der Zuführleitung angeordneten Ventils.

Der Strömungskanal weist zumindest eine angeschlossene Druckgasleitung auf, die mittels eines Ventils gesteuert ist und an dem Strömungskanal in zumindest einer Zuführöffnung für Druckgas mündet, die eingerichtet ist, in dem Strömungskanal eine Luftströmung vom Einlassende zum gegenüberliegenden Auslassende zu beschleunigen. Optional ist das Ventil gesteuert, abhängig vom Signal eines Detektors für die Stellung eines Lebensmittels auf der Transporteinrichtung für Lebensmittel.

Optional ist die Zufuhr von Druckgas zur Zuführöffnung gesteuert, z.B. ist die Zufuhr von Druckgas abhängig von einem Signal eines Detektors für die Anwesenheit eines an der Transporteinrichtung angeordneten Lebensmittels vor der Austrittsöffnung des Strömungskanals geöffnet, so dass nur bei Detektion eines Lebensmittels vor der Austrittsöffnung Druckgas gesteuert in den Strömungskanal geführt wird. Weiter optional ist die Zufuhr von Druckgas abhängig von einem Signal eines Durchflussmessers gesteuert. Generell kann das Druckgas der zumindest einen Zuführöffnung mit einem Druck von 0,1 bis 15 bar, z.B. 0,1 bis 10 bar zugeführt werden. Optional kann das Druckgas stoßweise zugeführt werden, z.B. in Stößen einer Dauer von 10 bis 3000 ms und einer Frequenz von bis zu 3000 Stößen/min (ca. 50 pro Sekunde). Dazu kann die Vorrichtung eingerichtet sein, ein Ventil in der Druckgasleitung gesteuert stoßweise zu öffnen. Alternativ kann die Vorrichtung eingerichtet sein, dass das Druckgas kontinuierlich der zumindest einen Zuführöffnung zugeführt wird.

In einer bevorzugten Ausführungsform wird die Einlassöffnung am Einlassende des Strömungskanals von einer konvexen Fläche aufgespannt, die sich rotationssymmetrisch um die Längsmittelachse des Strömungskanals erstreckt und bevorzugt eine zur Längsmittelachse des Strömungskanals vorstehende Krümmung bzw. eine konvexe Fläche aufweist, die bevorzugt parabelförmig ist. Optional steht die Krümmung bzw. konvexe Fläche entlang des Radius zur Längsmittelachse des Strömungskanals vor. Bevorzugt nimmt die Steigung der Krümmung in Richtung auf die Längsmittelachse des Strömungskanals zu, so dass bevorzugt die Steigung mit abnehmendem Radius größer wird, um eine zur Längsmittelachse zunehmende Krümmung zu bilden. Der Strömungskanal weist im Anschluss daran, z.B. im Anschluß an die konvexe Fläche, und gegenüber der Einlassöffnung, bzw. des Einlassendes, seinen kleinsten Querschnitt auf und weitet sich ab diesem kleinsten Querschnitt in Richtung zur Austrittsöffnung bzw. auf sein Auslassende, das dem Einlassende gegenüber liegt, vorzugsweise mit konisch oder parabelförmig zunehmendem Querschnitt. Das Einlassende, das die Öffnung des Strömungskanals bildet, wird von einer ringförmigen Zuführöffnung für Druckgas begrenzt, die mit der Druckgasleitung verbunden ist. Dabei ist die ringförmige Zuführöffnung durch eine von der Fläche, die die Einlassöffnung bildet und die bevorzugt konvex ist, beabstandete Schulter gebildet, sodass der Querschnitt der Zuführöffnung in einem an die Öffnung des Einlassendes angrenzenden Abschnitt angeordnet ist, vorzugsweise die Zuführöffnung einen axialen Abschnitt entlang der Längsmittelachse des Strömungskanals bildet. Die Schulter ist vorzugsweise ringförmig, sodass sie mit der beabstandeten konvexen Fläche, die die Einlassöffnung am Einlassende aufspannt, eine ringförmige Zuführöffnung für Druckgas um die Längsmittelachse des Strömungskanals bildet. Generell kann die zumindest eine Austrittsöffnung für Druckgas in Form zumindest einer Bohrung oder eines Röhrchens in der Wandung des Strömungskanals in einem Winkel von maximal 90°, maximal 75°, bevorzugt maximal 45° oder maximal 30° oder maximal 15° oder maximal 5° vom Einlassende her zur Längsmittelachse angeordnet sein. Da sich in dieser Ausführungsform der Durchmesser des Strömungskanals zu seinem Auslassende bzw. zu seiner Austrittsöffnung vergrößert, bildet der Strömungskanal keine Düse, deren Durchmesser sich zum Auslassende verkleinert, sondern optional eine Laval-Düse, um den Druck des eingesetzten Druckgases in Gasgeschwindigkeit umzusetzen.

In einer alternativen Ausführungsform kann der Strömungskanal zumindest abschnittsweise einen zylindrischen Innenquerschnitt aufweisen, optional mit einem über seine Länge konstanten Durchmesser oder mit abschnittsweise vom seinem Einlassende zum Auslassende zunehmenden oder abnehmenden Durchmesser. Die zumindest eine Austrittsöffnung für Druckgas kann z.B. in Form zumindest einer Bohrung oder eines Röhrchens in der Wandung des Strömungskanals in einem Winkel von maximal 75°, bevorzugt maximal 45° oder maximal 30° oder maximal 5° vom Einlassende her zur Längsmittelachse angeordnet sein. In dieser Ausführungsform reißt Druckgas, das durch die Zuführöffnung für Druckgas in den Strömungskanal strömt, die Luft in dem Strömungskanal mit und beschleunigt sie zur Austrittsöffnung.

Generell ist der Strömungskanal an seinem Einlassende zu Umgebung offen, so dass Gas aus der Umgebung in den Strömungskanal gesaugt werden kann, wenn der Strömungskanal mit Druckgas beaufschlagt wird, das durch die zumindest eine Zuführöffnung für Druckgas in den Strömungskanal einströmen gelassen wird.

Der Strömungskanal ist mit seiner Längsmittelachse und seiner Austrittsöffnung auf eine Transporteinrichtung für Lebensmittel gerichtet. Bevorzugt ist zumindest ein Strömungskanal auf jeder Seite der Transporteinrichtung angeordnet und auf diese gerichtet. Die Transporteinrichtung kann ein etwa horizontal laufendes Transportband mit Durchbrüchen sein, z.B. ein umlaufendes Gitterband oder parallel umlaufende beabstandete Bandelemente, und ein Strömungskanal kann von oben und ein weiterer Strömungskanal kann von unten gegen das Transportband gerichtet sein. Alternativ kann die Transporteinrichtung eine Reihe beweglicher Hänger, z.B. Haken sein, an die Lebensmittel angehängt werden können, und jeweils zumindest ein Strömungskanal kann von jeder Seite gegen einen Bereich der Transporteinrichtung oder gegen einen Bereich unterhalb der Transporteinrichtung gerichtet sein, in dem das Lebensmittel angeordnet ist.

Optional kann der Strömungskanal an seinem Auslassende von einem Leitelement vollständig oder teilweise umfasst sein, der in einem radialen Abstand vom Strömungskanal angeordnet ist und sich koaxial zur Längsmittelachse des Strömungskanals erstreckt, z.B. einem Rohrabschnitt, der sich koaxial und mit radialem Abstand um das Auslassende bzw. um die Austrittsöffnung erstreckt. Das Leitelement kann einen konstanten Innendurchmesser aufweisen, einen in Strömungsrichtung abnehmenden Innendurchmesser oder einen in Strömungsrichtung abnehmenden Innendurchmesser, der sich anschließend zu seinem Auslass vergrößert. Ein von einem Leitelement zumindest an seinem Auslassende umfasster Strömungskanal erlaubt eine Fokussierung des austretenden Massestrahls, so dass die Masse genauer auf das Lebensmittel aufgetragen werden kann.

Optional kann das Leitelement mit Druckgas beaufschlagt werden, das eine Gasströmung zwischen dem Leitelement und dem Strömungskanal ausbildet. Ein mit Druckgas beaufschlagtes Leitelement kann an seinem dem Auslassende bzw. der Austrittsöffnung gegenüberliegenden Ende geschlossen oder offen sein. Zur Beaufschlagung mit Druckgas, das eine Gasströmung zwischen dem Leitelement und dem Strömungskanal in Richtung vom Einlassende bzw. der Einlassöffnung zum Auslassende bzw. zur Austrittsöffnung des Strömungskanals bzw. in Richtung der Strömung von Gas und Masse innerhalb des Strömungskanals ausbildet, weist das Leitelement z.B. zumindest einen, vorzugsweise zumindest zwei um seinen Umfang verteilte Zuführöffnungen für Druckgas auf. Das Leitelement kann bei Beaufschlagung mit Druckgas einen Hüllstrom um den aus dem Strömungskanal austretenden Strom aus Gas und Masse bilden. Ein solcher Hüllstrom kann die Ausrichtung und Geschwindigkeit des Stroms aus Gas und Masse erhöhen, z.B. diesen Strom fokussieren, der aus dem Strömungskanal austritt.

Optional ist das Druckgas, mit dem das Leitelement beaufschlagt wird, und/oder das Druckgas, mit dem der Strömungskanal beaufschlagt wird, ionisiert. Für die Ionisierung des Druckgases kann eine Ionisierungseinrichtung vorgesehen sein, z.B. zwischen der jeweiligen Druckgasleitung und dem Leitelement bzw. dem Strömungskanal.

Weiter optional kann das Druckgas, mit dem das Leitelement beaufschlagt wird, und/oder das Druckgas, mit dem der Strömungskanal beaufschlagt wird, gekühlt sein, z.B. auf eine Temperatur von -120 bis +250°C temperiert sein. Dazu kann die Druckgasleitung und/oder die Druckgasquelle gekühlt sein bzw. dazu eingerichtet sein, das Druckgas bei einer solchen Temperatur zur Verfügung zu stellen. Druckgas ist optional Luft oder Stickstoff oder Kohlendioxid oder eine Mischung aus zumindest zweien dieser.

Es hat sich gezeigt, dass ein Verfahren zum Auftragen flüssiger Massen mittels der erfindungsgemäßen Vorrichtung dazu führt, dass die auf das Lebensmittel aufgetragene Masse eine gleichmäßige Verteilung auch der festen Inhaltsstoffe in der Beschichtung auf dem Lebensmittel aufweist. Weiterhin hat sich gezeigt, dass die auf das Lebensmittel aufgetragene Masse Gaseinschlüsse aufweist, die bei anschließendem Einfrieren zumindest zum Teil erhalten bleiben und bevorzugt der aufgetragenen Masse den Eindruck eines großen Volumens verleihen.

Die Vorrichtung und das Verfahren eignen sich insbesondere zum Auftragen flüssiger Massen, die bevorzugt darin verteilte Stücke aufweisen, mit einer dynamischen Viskosität im Bereich von 0,5 mPas bis 200 Pas, z.B. 50 bis 200 oder bis 150 Pas, oder bis 1×10⁴ mPas bei der Temperatur, bei der das Verfahren durchgeführt wird, gemessen bei einer Scherrate von 1/s in einem Rotationsviskosimeter. Die Temperatur, bei der das Verfahren durchgeführt wird, liegt z.B. bei -80 °C bis 310°C oder bis 15 °C, bevorzugt bei bis zu 5°C, z.B. bei -20°C bis 3°C oder bei -5°C oder 0°C bis 5°C oder bis 3°C. Bevorzugt ist die Masse, optional das in den Strömungskanal zugeführte Druckgas, auf eine Temperatur in dem Bereich temperiert, bei dem das Verfahren durchgeführt wird. Alternativ kann die Masse unabhängig von der Temperatur, bei der das Verfahren durchgeführt wird, auf +310°C bis -80°C , z.B. auf-20 °C bis 310°C oder bis 15 °C, bevorzugt bis zu 5°C, z.B. auf -20°C bis 3°C oder auf -5°C oder 0°C bis 5°C oder bis 3°C temperiert sein. Das Durchführen des Verfahrens und das Temperieren der Masse auf eine Temperatur unterhalb von 0°C ist z.B. für Öl und Emulsionen bevorzugt, um diese in größerer Schichtdicke aufzutragen und/oder um für die in der Masse enthaltenen Stücke eine gleichmäßige Verteilung und/oder ein gutes Anhaften zu erzielen.

Für das Temperieren der Masse kann z.B. bevorzugt der Vorratsbehälter auf diese Temperatur gekühlt sein. Die Viskosität kann mit bekannten Mitteln eingestellt werden, z.B. durch Zusetzen von Verdickungsmitteln und/oder feinverteilten Inhaltsstoffen zu der Masse.

Optional weist die Vorrichtung eine Gefriereinrichtung auf, durch die die Lebensmittel vor und/oder nach dem Auftragen der Masse transportiert werden. Eine Gefriereinrichtung, die eingerichtet ist, die Lebensmittel vor dem Auftragen der Masse auf eine Temperatur von kleiner als 0°C, z.B. auf eine Temperatur im Bereich von -70 bis -5°C oder bis -20 °C zu kühlen, kann die Transporteinrichtung in einem Bereich nur vor dem Bereich umfassen, in dem der Strömungskanal auf die Transporteinrichtung gerichtet ist, oder kann auch den Bereich umfassen, in dem der Strömungskanal auf die Transporteinrichtung gerichtet ist. Entsprechend können im Verfahren die Lebensmittel vor dem Auftragen der Masse auf eine Temperatur von kleiner als 0°C, z.B. auf eine Temperatur im Bereich von -70 bis -5°C oder bis -20 °C gekühlt werden, optional können die Lebensmittel auch während des Auftragens der Masse auf eine Temperatur von kleiner als 0°C, z.B. auf eine Temperatur im Bereich von -70 bis -5°C oder bis -20 °C gekühlt werden. Auf diese Weise kann das Anhaften der aufgetragenen Masse, optional mit Gaseinschlüssen, an den Lebensmitteln erhöht werden. Entsprechend ist die Vorrichtung zur Verwendung als Auftragsvorrichtung von flüssigen Massen auf Lebensmittel geeignet, die auf eine Temperatur von kleiner als 0°C, z.B. auf eine Temperatur im Bereich von -70 bis -5°C oder bis -20 °C gekühlt sind.

Bevorzugt weist die Vorrichtung eine Kühleinrichtung auf, die eingerichtet ist, die Lebensmittel im Anschluß an das Auftragen der Masse auf eine Temperatur von kleiner als 0°C, z.B. auf eine Temperatur im Bereich von -70 bis -5°C oder bis -20 °C zu kühlen. Im Verfahren wird die zumindest eine Masse, die pulverförmig, bevorzugt flüssig, homogen oder flüssig mit darin enthaltenen Stücken ist, wobei die Stücke bevorzugt eine Größe oder Größenverteilung von 0,1 mm bis 0,5 oder von 0,5 bis 4 mm, z.B. von 2 mm bis zu 10 mm, bevorzugter bis 5 oder bis 3 mm in der größten Ausdehnung aufweisen, durch die Mündung der Zuführleitung geführt, wobei die Zuführleitung parallel oder in einem Winkel zur Längsmittelachse des Strömungskanals geneigt ist oder in einen Winkel zur Längsmittelachse des Strömungskanals verschwenkt wird, optional entlang einer oder zweier Achsen, die senkrecht zur Längsmittelachse des Strömungskanals stehen, oder nur koaxial zur Längsmittelachse des Strömungskanals verschoben und in einer Stellung festgelegt wird, in der ihre Mündung in einem Bereich angeordnet ist, der sich von einem Abstand vor dem Einlassende bzw. vor der Einlassöffnung des Strömungskanals bis in diesen erstreckt, z.B. bis in dessen Abschnitt geringsten Durchmessers oder bis vor die zumindest eine Zuführöffnung für Druckgas erstreckt, oder in einem Bereich, der sich von der Zuführöffnung für Druckgas bis zur Austrittsöffnung des Strömungskanals erstreckt.

Während des Verfahrens wird Druckgas durch die zumindest eine Zuführöffnung für Druckgas an oder in den Strömungskanal geführt, so dass in dem Strömungskanal Gas von der Einlassöffnung zur Austrittsöffnung strömt und dabei Gas aus der Umgebung in die Einlassöffnung saugt. Die durch die Zuführleitung geleitete Masse tritt in die Strömung vor der Einlassöffnung des Strömungskanals oder in die Strömung innerhalb des Strömungskanals ein und tritt mit dem zugeführten Druckgas und in die Einlassöffnung eingesaugtem Gas aus der Umgebung anschließend aus der Austrittsöffnung des Strömungskanals. Dieser austretende Strom wird auf die Lebensmittel gerichtet, die mittels einer Transporteinrichtung in einem Abstand von der Austrittsöffnung an der Austrittsöffnung vorbeigeführt werden. Vorzugsweise läuft die Transporteinrichtung kontinuierlich und die Masse wird auf die an der Transporteinrichtung kontinuierlich transportierten Lebensmittel aufgetragen.

Optional wird Druckgas in den Zwischenraum zwischen einem Leitelement, das in einem Abstand die Austrittsöffnung des Strömungskanals umfasst, strömen gelassen und/oder Gas aus der Umgebung, z.B. Umgebungsluft, wird durch das offene Ende dieses Zwischenraums strömen gelassen. Dabei bewegt sich das Druckgas in dem Zwischenraum und/oder das aus der Umgebung in den Zwischenraum eingeströmte Gas zwischen dem Leitelement und dem Strömungskanal in der Richtung vom Einlassende zum Auslassende des Strömungskanals und kann einen Hüllgasstrom um die aus der Austrittsöffnung tretende Masse und das austretende Gas bilden.

Optional kann die Vorrichtung eine Einrichtung zum Fördern einer weiteren Masse aufweisen, die pulverförmig oder flüssig sein kann, in den Abstand zwischen dem Leitelement und dem Strömungskanal. Dabei wird zusätzlich zu dem Druckgas eine weitere pulverförmige oder flüssige Masse in den Hüllstrom eingebracht.

Die Vorrichtung weist zumindest eine, bevorzugt zumindest zwei zweite Zuführungsleitungen auf, die zwischen der Zuführöffnung für Druckgas und der Austrittsöffnung in den Strömungskanal münden. Solche zweiten Zuführungsleitungen sind mit einer Druckgasquelle, einer Zuführleitung für eine Masse, pulverförmig oder flüssig, oder zumindest zweien dieser verbunden, um zusätzlich Druckgas und/oder eine Masse vor der Austrittsöffnung in den Strömungskanal zu drücken. Dabei können die zweiten Zuführungsleitungen in einem Bereich des Strömungskanals zwischen der Zuführöffnung für Druckgas in den Strömungskanal und dessen Austrittsöffnung münden, optional zwischen dem geringsten Durchmesser des Strömungskanals und der Austrittsöffnung münden.

Die zweiten Zuführleitungen können über die Innenwand des Strömungskanals in diesen ragen oder bündig in der Innenwand des Strömungskanals münden. Generell können die zweiten Zuführleitungen eine Mündung aufweisen, die stumpf oder abgeschrägt ist. Optional ist ein Ventil in der Zuführleitung für die Masse und/oder ein Ventil in der Druckgasleitung, die in zumindest einer Zuführöffnung für Druckgas an oder in dem Strömungskanal mündet, abhängig von einem Detektor gesteuert, der die Stellung von Lebensmitteln auf der Transporteinrichtung aufnimmt.

Die Erfindung wird nun genauer mit Bezug auf die Figuren beschrieben, die schematisch in
- Figur 1 eine Vorrichtung,
- Figur 2 eine Vorrichtung und
- Figur 3 eine Ausführungsform der erfindungsgemäßen Vorrichtung,
- Figur 4 eine weitere Ausführungsform der erfindungsgemäßen Vorrichtung,
- Figur 5 mögliche Ausführungsformen der Zuführleitung und
- Figur 6 eine Vorrichtung
zeigen.

In den Figuren sind Ausführungsformen dargestellt, in denen die Zuführleitung verschieblich bzw. schwenkbar ist und in einer Stellung festlegbar ist. Dabei zeigen die Stellungen, in die die Zuführleitung verschieblich bzw. schwenkbar ist, die Stellungen an, in denen die Mündung der Zuführleitung in Ausführungsformen angeordnet sein kann, in denen die Zuführleitung festgelegt ist, bzw. nicht verschieblich und nicht schwenkbar ist.

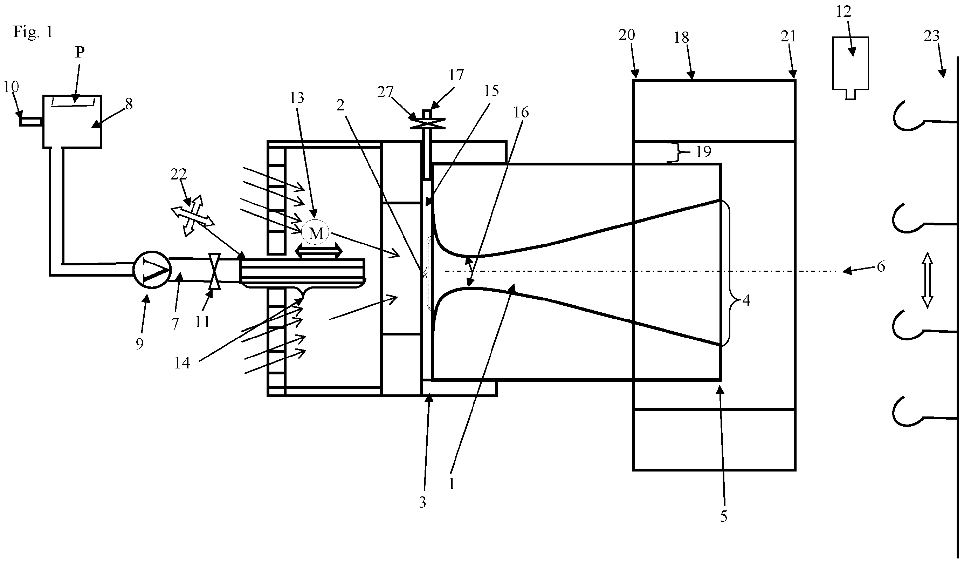

Die Figur 1 zeigt eine Vorrichtung mit einem Strömungskanal 1, der sich von seiner Einlassöffnung 2 am Einlassende 3 zu seiner Austrittsöffnung 4 am Auslassende 5 um eine Längsmittelachse 6 erstreckt. An der Einlassöffnung 2 mündet eine Zuführleitung 7, die mit einem Vorratsbehälter 8 für eine flüssige Masse verbunden ist. In der Zuführleitung 7 ist eine optionale Pumpe 9 als Fördereinrichtung angeordnet, bevorzugt ist alternativ als Fördereinrichtung der Vorratsbehälter 8 mit Druck beaufschlagt, z.B. durch einen Druckgasanschluß 10, und in der Zuführleitung 7 ist ein gesteuertes Ventil 11 angeordnet. Das Ventil 11 ist, insbesondere bei Beaufschlagung des Vorratsbehälters mit Druck, der z.B. konstant sein kann, abhängig vom Signal eines Detektors 12 gesteuert, der die Anwesenheit eines Lebensmittels an einer Position vor der Austrittsöffnung 4 des Strömungskanals 1 aufnimmt. Ein solcher Detektor 12 kann z.B. eine Kamera sein.

Die Zuführleitung 7, die bevorzugt zumindest in seinem endständigen Abschnitt 14, der die Mündung aufspannt, ein Rohr ist, ist relativ zum Strömungskanal 1 verschieblich geführt, z.B. mittels eines gesteuerten Stellmotors 13. Wie bevorzugt, ist der endständige Abschnitt 14 der Zuführleitung 7 entlang der Längsmittelachse 6 des Strömungskanals 1 angeordnet und verschieblich. Bevorzugt ist der endständige Abschnitt 14 der Zuführleitung 7 von einer ersten Position, in der seine Mündung in einem Bereich um die Einlassöffnung 2 des Strömungskanals 1 angeordnet ist, wobei sich dieser Bereich von einem Abstand vor der Einlassöffnung 2 und gegenüber dem Strömungskanal 1 bis in einen Abstand von der Einlassöffnung 2 in den Strömungskanal 1 erstrecken kann, z.B. in einem Abstand von 0,1 mm bis 30 mm, bevorzugt von 0,2 bis 10 mm von der Einlassöffnung 2 vor dem bzw. außerhalb des Strömungskanals 1, bis in eine zweite Position gesteuert verschieblich, in der seine Mündung bis in den Bereich innerhalb des Strömungskanals 1 angeordnet ist, der stromabwärts zumindest einer Zuführöffnung 15 für Druckgas angeordnet ist und der sich in Richtung der Austrittsöffnung 4 erstreckt, optional bis in oder über einen Bereich des Strömungskanals 1 hinaus, an dem dieser seinen geringsten Innendurchmesser aufweist, wobei der Bereich durch die Austrittsöffnung 4 begrenzt sein kann. Die senkrecht zueinander stehenden Doppelpfeile deuten die zumindest eine Verschiebeachse 22, optional zwei senkrecht zueinander stehende Verschiebeachsen 22 an, die senkrecht zur Längsmittelachse 6 des Strömungskanals 1 stehen, entlang derer die Zuführleitung 7 generell zusätzlich oder alternativ zur Verschieblichkeit entlang der oder parallel zu der Längsmittelachse 6 verschieblich geführt ist.

In der in Figur 1 gezeigten Vorrichtung weist der Strömungskanal 1 an einem Einlassende 3 eine konvexe Fläche 16 auf, die sich rotationssymmetrisch um die Längsmittelachse 6 erstreckt und in Richtung auf das Auslassende 5 zu einem Abschnitt kleinsten Querschnitts verjüngt und sich anschließend zur Austrittsöffnung aufweitet, wobei der Querschnitt in Richtung auf die Längsmittelachse 6 sich vom Einlassende 5 konvex zum Abschnitt kleinsten Querschnitts mit zunehmender Steigung der Krümmung verjüngt und sich anschließend bis zur Austrittsöffnung 4 konisch, bevorzugt parabelförmig aufweitet. Die Zuführöffnung 15 für Druckgas ist ringförmig angrenzend an die konvexe Fläche 16 am Einlassende 3 des Strömungskanals 1 angeordnet. Diese Zuführöffnung 15 ist bevorzugt parallel zu der angrenzenden konvexen Fläche 16 angeordnet. Die Einlassöffnung 2 des Strömungskanals 1 ist generell zur Umgebung hin offen, so dass Gas aus der Umgebung in die Einlassöffnung 2 gesaugt wird, wenn Druckgas durch die Zuführöffnung 15 in den Strömungskanal 1 strömt.

Bei Zufuhr von Druckgas durch die Zuführöffnung 15 strömt das Druckgas entlang der konvexen Fläche in den Strömungskanal 1 und bildet eine Strömung aus, die aus der Austrittsöffnung 4 austritt und an der Einlassöffnung 2 Gas aus der Umgebung, z.B. Umgebungsluft, in den Strömungskanal 1 einsaugt. Die Zuführleitung 7 leitet Masse aus dem Vorratsbehälter 8 bis an ihre Mündung, so dass die Masse nach Austreten aus der Mündung der Zuführleitung 7 von der Gasströmung in dem Strömungskanal 1 erfasst und durch den Strömungskanal 1 bewegt wird. Dabei kann die Gasströmung auch Masse erfassen, wenn die Mündung der Zuführleitung 7 vor der Einlassöffnung 2 angeordnet ist, da die Gasströmung vor der Einlassöffnung 2 einen Sog ausbildet, der in den Strömungskanal 1 gerichtet ist. Entsprechend strömt beim Verfahren ein Strom aus Druckgas, Masse und angesaugtem Gas entlang des Strömungskanals 1 und tritt aus dessen Austrittsöffnung 4 aus. Die Zuführleitung 7 für Druckgas ist mittels einer Druckgasleitung 17 mit einer Quelle für Druckgas verbunden, z.B. einem Druckgasbehälter oder einem Gasverdichter.

In Figur 1 umfasst ein optionales Leitelement 18 mit radialem Abstand 19, bevorzugt konzentrisch, den Strömungskanal 1 und erstreckt sich zumindest über das Auslassende 5 des Strömungskanals 1. Das Leitelement 18 weist in Figur 1 einen über seine Länge konstanten runden Innenquerschnitt auf. In dem radialen Abstand 19 zwischen dem Strömungskanal 1 und dem Leitelement 18 kann durch den Strom aus Masse und Gas, das aus der Austrittsöffnung 4 tritt, Gas aus der Umgebung mitgerissen werden. Optional kann das Leitelement 18 mit Druckgas beaufschlagt werden, das entlang des radialen Abstands 19 in der Richtung strömt, wie der Strom aus Gas und Masse im Strömungskanal 1. Dabei kann das Leitelement 18 an seinem ersten Ende 20, das dem Einlassende 3 des Strömungskanals 1 zugewandt ist, und an seinem gegenüberliegenden Auslassende 21 offen sein. Die Transporteinrichtung 23 ist senkrecht zur Längsmittelachse 6 in einem Abstand vor der Austrittsöffnung 4 beweglich, wie durch den Doppelpfeil angedeutet ist.

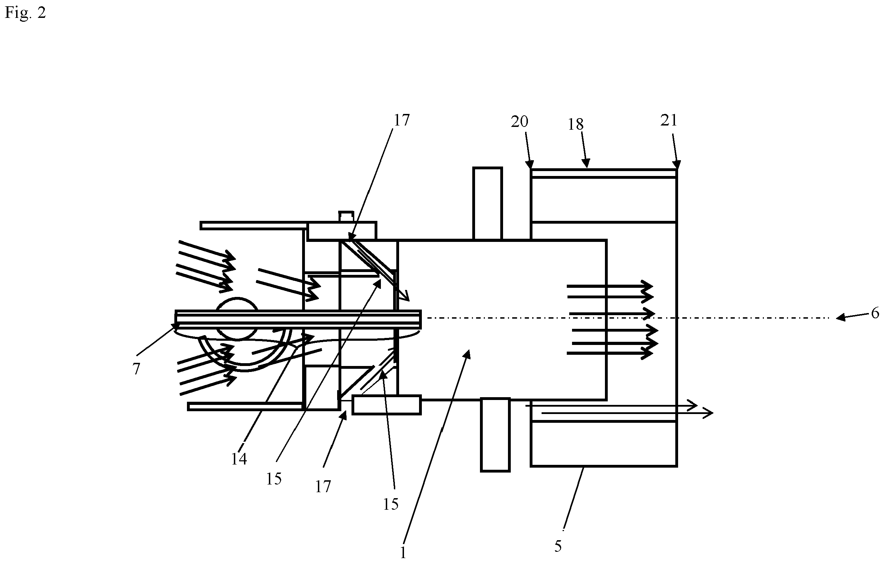

Die Figur 2 zeigt eine Vorrichtung, in der der Strömungskanal 1 angrenzend an sein Einlassende 3 einen konstanten bzw. zylindrischen Innenquerschnitt aufweist, zumindest eine Zuführöffnung für Druckgas innerhalb des Strömungskanals 1 in einem Bereich aufweist, der von der Einlassöffnung 2 und der Austrittsöffnung 4 beabstandet ist. Die Zuführöffnung 15 mündet in einem Winkel gegen die Längsachse des Strömungskanals 1, um eine Luftströmung von der Einlassöffnung 2 zur Austrittsöffnung 4 zu erzeugen. Wie in Figur 1 ist das Leitelement 18 zur Beaufschlagung mit Druckgas verbunden und ist eingerichtet, eine Gasströmung zwischen dem Leitelement 18 und dem Strömungskanal 1 in Richtung von der Einlassöffnung 2 zur Austrittsöffnung 4 auszubilden. Die Zuführöffnung 15 kann generell, wie dies in Figur 2 auch dargestellt ist, bündig in der Innenfläche des Strömungskanals 1 münden. Die Zuführöffnung 15 ist mit einer Druckgasleitung 17 verbunden.

In dem Abschnitt des Strömungskanals 1, der sich zwischen der zumindest einen Zuführöffnung 15 für Druckgas und der Austrittsöffnung 4 erstreckt, kann der Strömungskanal 1 einen zylindrischen Innenquerschnitt, z.B. mit dem selben Innendurchmesser wie der an das Einlassende 3 angrenzende Innenquerschnitt oder mit einem größeren oder kleineren Innendurchmesser aufweisen.

Zur Zuleitung von Druckgas in den radialen Abstand 19 zwischen dem optionalen Leitelement 18 und dem Strömungskanal 1 kann ein Ringspalt 25 den Strömungskanal 1 umfassen und mit dem ringförmigen radialen Abstand 19 verbunden sein. Auf diese Weise bildet das Leitelement 18 mit dem Ringspalt 25, an den eine Druckgasleitung angeschlossen ist, eine Einrichtung zur Erzeugung eines beschleunigten Hüllstroms um den Gasstrom, der aus der Austrittsöffnung 4 tritt.

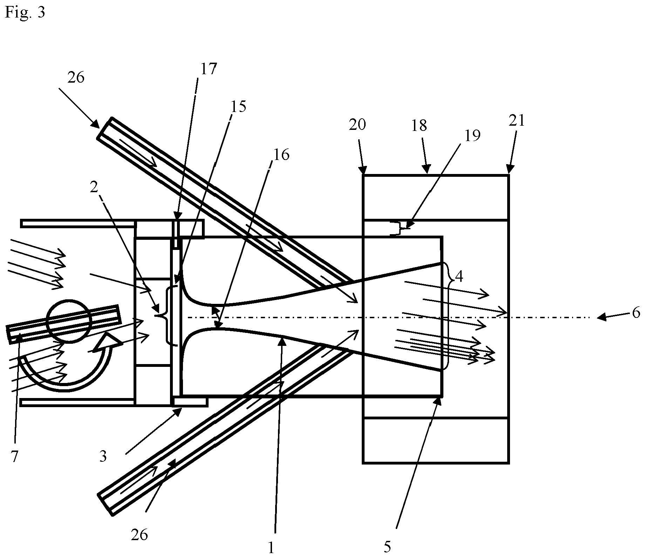

Die Figur 3 zeigt eine Ausführungsform, bei der zumindest ein, bevorzugt zumindest zwei zweite Zuführungsleitungen 26 zwischen der Zuführöffnung 15 für Druckgas und der Austrittsöffnung 4 in den Strömungskanal 1 münden. Solche zweiten Zuführungsleitungen 26 können mit einer Druckgasquelle, einer Zuführleitung 7 für eine Masse, pulverförmig oder flüssig, oder zumindest zweien dieser verbunden sein, um zusätzlich Druckgas und/oder eine Masse in den Strömungskanal 1 zu drücken. In der gezeigten Ausführungsform des Strömungskanals 1 münden die zweiten Zuführungsleitungen 26 bevorzugt in einem Bereich des Strömungskanals 1 zwischen dessen geringstem Durchmesser und der Austrittsöffnung 4.

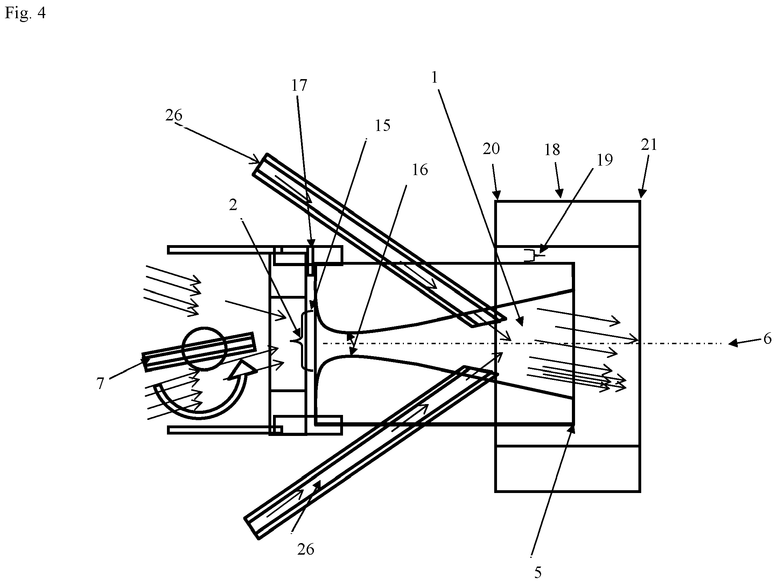

Die Figur 4 zeigt eine Ausführungsform, die derjenigen von Figur 3 entspricht, wobei jedoch die zweiten Zuführleitungen 26 über die Innenwand des Strömungskanals 1 in diesen ragen. Generell können die zweiten Zuführleitungen 26 eine Mündung aufweisen, die stumpf oder abgeschrägt ist.

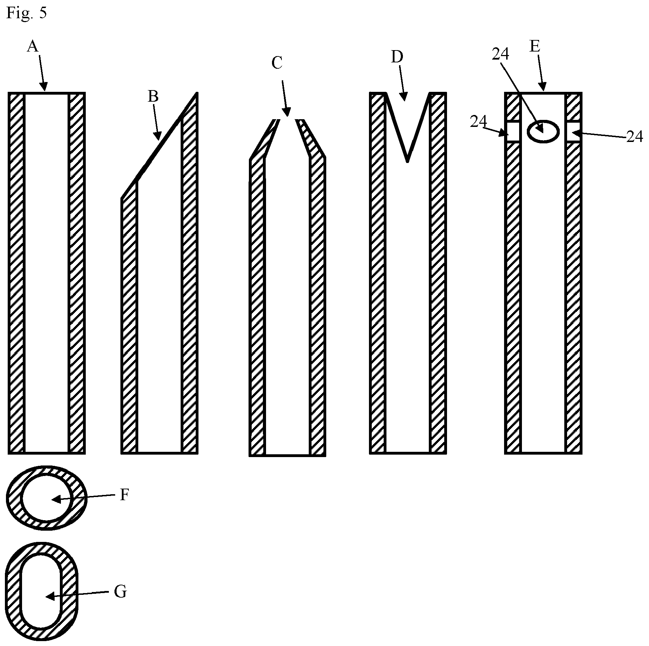

Die Figur 5 zeigt mögliche Ausführungsformen der Mündung der Zuführleitung 7, bei A eine Zuführleitung, deren Mündung senkrecht zu ihrer Längsachse angeordnet ist, bei B eine abgeschrägte Mündung B, bei C eine zulaufende Mündung C, deren Querschnitt kleiner ist als der Querschnitt der angrenzenden Zuführleitung 7, bei D eine zylindrische Zuführleitung 7, die an zwei an die Mündung D angrenzenden und gegenüberliegenden Abschnitten eingeschnitten ist, z.B. V-förmig oder rechteckig, bei E eine Mündung E, die senkrecht zur Längsachse der Zuführleitung 7 angeordnet ist und in einem Abstand hinter der Mündung E zumindest eine, vorzugsweise zumindest zwei, z.B. drei oder vier Bohrungen 24 in der Zuführleitung 7.

In jeder Ausführungsform kann die Zuführleitung 7 einen Innenquerschnitt aufweisen, der bevorzugt bis angrenzend an ihre Mündung konstant ist, und der optional einen kreisförmigen Querschnitt F oder einen ovalen Querschnitt G aufweist.

Es hat sich gezeigt, dass die Ausführungsform der Mündung A-E, optional in Verbindung mit der Ausführungsform des Querschnitts F, G der Zuführleitung, die Verteilung der Masse beeinflusst, die aus der Austrittsöffnung 4 tritt.

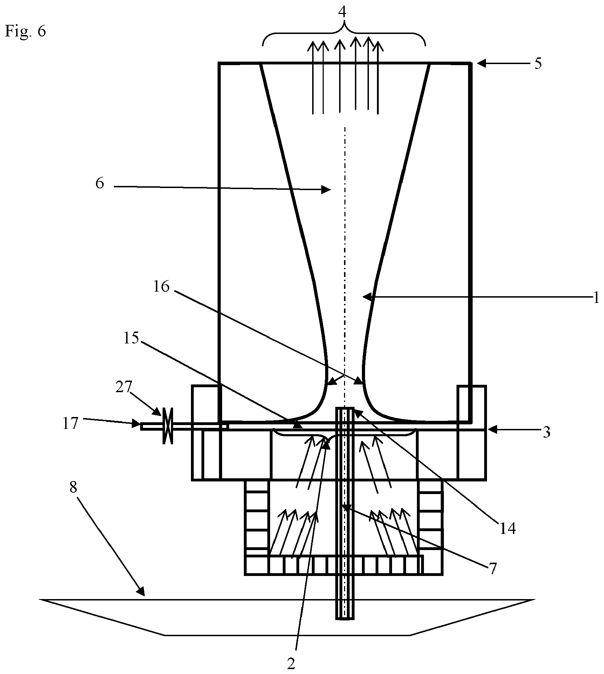

Die Figur 6 zeigt eine Vorrichtung, bei der die Zuführleitung 7 relativ zum Strömungskanal 1 festgelegt sein kann. Das eine Ende der Zuführleitung 1 mündet in einem Bereich, der vom Strömungskanal 1 beabstandet ist und/oder innerhalb des Strömungskanals 1 enden kann, und das andere Ende der Zuführleitung 7 ist in einem Vorratsbehälter 8 angeordnet, um daraus Masse anzusaugen. Dabei wirkt der vom Strömungskanal 1 erzeugte Unterdruck durch die Zuführleitung 7 bis in deren Ende, das im Vorratsbehälter 8 angeordnet ist, und saugt die Masse daraus in die Zuführleitung 7. Der Strömungskanal 1 kann vertikal ausgerichtet sein, insbesondere oberhalb eines Vorratsbehälters 8 angeordnet sein, wobei die Zuführleitung 7 in das Volumen des Vorratsbehälters 8 ragt. Insbesondere in dieser Ausführungsform kann die Zuführleitung 7 ohne eine Pumpe 9 darin ausgebildet sein.

**Bezugszeichen:**

| | | | |
|---|---|---|---|
| 1 | Strömungskanal | F | kreisförmiger Querschnitt |
| 2 | Einlassöffnung | G | ovaler Querschnitt |
| 3 | Einlassende | | |
| 4 | Austrittsöffnung | | |
| 5 | Auslassende | | |
| 6 | Längsmittelachse | | |
| 7 | Zuführleitung | | |
| 8 | Vorratsbehälter | | |
| 9 | Pumpe | | |
| 10 | Druckgasanschluß | | |
| 11 | gesteuertes Ventil | | |
| 12 | Detektor | | |
| 13 | gesteuerter Stellmotor | | |
| 14 | endständiger Abschnitt der Zuführleitung | | |
| | | | |
| 15 | Zuführöffnung für Druckgas | | |
| 16 | konvexe Fläche | | |
| 17 | Druckgasleitung | | |
| 18 | Leitelement | | |
| 19 | radialer Abstand | | |
| 20 | erstes Ende des Leitelements | | |
| 21 | Auslassende des Leitelements | | |
| 22 | Verschiebeachsen | | |
| 23 | Transporteinrichtung | | |
| 24 | Bohrung | | |
| 25 | Ringspalt | | |
| 26 | zweite Zuführungsleitung | | |
| 27 | Ventil | | |
| A-E | Mündung | | |

## Patentansprüche

1. Vorrichtung zur Verwendung als Auftragvorrichtung für eine Masse auf Lebensmittel, mit zumindest einer an einem Strömungskanal (1) angeschlossenen Druckgasleitung (17) und einer Transporteinrichtung (23), die eingerichtet ist, die Lebensmittel vor einer Austrittsöffnung (4) des Strömungskanals (1) entlang zu transportieren, **dadurch gekennzeichnet, dass** die Einlassöffnung (2) am Einlassende des Strömungskanals (1) von einer konvexen Fläche aufgespannt ist, die sich rotationssymmetrisch um die Längsmittelachse (6) des Strömungskanals (1) erstreckt und eine zur Längsmittelachse (6) des Strömungskanals (1) vorstehende Krümmung aufweist, deren Steigung in Richtung auf die Längsmittelachse (6) des Strömungskanals (1) zunimmt, im Anschluss daran und gegenüber der Einlassöffnung der Strömungskanal (1) seinen kleinsten Querschnitt aufweist und sich der Strömungskanal (1) ab diesem kleinsten Querschnitt in Richtung auf die Austrittsöffnung (4) aufweitet, wobei die Einlassöffnung von einer ringförmigen Zuführöffnung für Druckgas begrenzt wird, die mit der Druckgasleitung (17) verbunden ist und dass eine Zuführleitung (7) in einem Bereich mündet, in dem der Strömungskanal (1) Unterdruck erzeugt, wobei sich dieser Bereich von vor der Einlassöffnung (2) bis innerhalb des Strömungskanals (1) erstreckt, und das gegenüberliegende offene Ende der Zuführleitung (7) in einem Behälter (8) für die Masse angeordnet ist, **gekennzeichnet durch** zumindest eine zweite Zuführungsleitung (26), die zwischen der Zuführöffnung (15) für Druckgas und der Austrittsöffnung (4) in den Strömungskanal (1) mündet und die mit zumindest einer Druckgasquelle und/oder einer Zuführleitung (7) für eine Masse verbunden ist.

2. Vorrichtung nach einem der voranstehenden Ansprüche, **dadurch gekennzeichnet, dass** die Zuführleitung (7) für die Masse relativ zum Strömungskanal (1) verschieblich geführt und in einer Stellung festlegbar ist, so dass die Mündung der Zuführleitung (7) in einem Bereich verschieblich ist und in einer Stellung festlegbar ist, der sich von einem Abstand vor der Einlassöffnung (2) bis in den Strömungskanal (1) erstreckt, und dass die Stellung der Mündung der Zuführleitung (7) abhängig vom Druck und/oder von der Geschwindigkeit und/oder dem Massestrom der aus der Zuführleitung (7) austretenden Masse oder von der Förderrate einer Fördereinrichtung, die zur Förderung der Masse durch die Zuführleitung (7) eingerichtet ist, gesteuert verschieblich geführt ist..

3. Vorrichtung nach einem der voranstehenden Ansprüche, **dadurch gekennzeichnet, dass** der Strömungskanal (1) zumindest eine angeschlossene Druckgasleitung (17) aufweist, die mittels eines Ventils (27) gesteuert ist und an oder in dem Strömungskanal (1) in zumindest einer Zuführöffnung (15) für Druckgas mündet, die eingerichtet ist, in dem Strömungskanal (1) eine Luftströmung von der Einlassöffnung (2) zur gegenüberliegenden Austrittsöffnung (4) auszubilden.

4. Vorrichtung nach einem der voranstehenden Ansprüche, **dadurch gekennzeichnet, dass** das Ventil (27) in der Druckgasleitung (17) abhängig vom Signal eines Detektors für die Stellung eines Lebensmittels auf der Transporteinrichtung (23) für Lebensmittel gesteuert ist.

5. Vorrichtung nach einem der voranstehenden Ansprüche, **dadurch gekennzeichnet, dass** an dem Ende der Zuführleitung (7), das deren Mündung gegenüberliegt, ein Vorratsbehälter (8) für die Masse angeschlossen ist und als Fördereinrichtung zur Förderung der Masse in der Zuführleitung (7) eine Pumpe (9) angeordnet ist und/oder als Fördereinrichtung zur Förderung der Masse der Vorratsbehälter (8) mit Druckgas beaufschlagt ist oder eine Wand des Vorratsbehälters (8) als ein gegen das Innenvolumen des Vorratsbehälters (8) belasteter Kolben ausgebildet ist und in der Zuführleitung (7) ein gesteuertes Ventil (11) angeordnet ist.

6. Vorrichtung nach einem der voranstehenden Ansprüche, **dadurch gekennzeichnet, dass** ein Leitelement (18) in einem radialen Abstand (19) den Strömungskanal (1) an dessen Austrittsöffnung (4) umfasst, wobei das Leitelement (18) sich koaxial zur Längsmittelachse des Strömungskanals (1) erstreckt.

7. Vorrichtung nach Anspruch 6, **dadurch gekennzeichnet, dass** das Leitelement (18) mit einer Einrichtung zur Beaufschlagung mit Druckgas verbunden ist, die eingerichtet ist, eine Gasströmung zwischen dem Leitelement (18) und dem Strömungskanal (1) in Richtung von der Einlassöffnung (2) zur Austrittsöffnung (4) auszubilden.

8. Vorrichtung nach Anspruch 7, **gekennzeichnet durch** eine Einrichtung zum Fördern einer weiteren pulverförmigen oder flüssigen Masse in den radialen Abstand (19) zwischen dem Leitelement (18) und dem Strömungskanal (1).

9. Verfahren zur Herstellung von beschichteten Lebensmitteln durch Auftragen einer Masse auf Lebensmittel, wobei die Masse flüssig mit darin verteilten Stücken ist, die eine Größe von 1 mm bis zu 10 mm aufweisen, bei dem Lebensmittel vor einer Austrittsöffnung (4) eines Strömungskanals (1) entlang transportiert werden und die Masse durch die Austrittsöffnung (4) des Strömungskanals (1) gegen die Lebensmittel bewegt wird, **dadurch gekennzeichnet, dass** die Einlassöffnung (2) am Einlassende des Strömungskanals (1) von einer konvexen Fläche aufgespannt ist, die sich rotationssymmetrisch um die Längsmittelachse (6) des Strömungskanals (1) erstreckt und eine zur Längsmittelachse (6) des Strömungskanals (1) vorstehende Krümmung aufweist, deren Steigung in Richtung auf die Längsmittelachse (6) des Strömungskanals (1) zunimmt, der Strömungskanal (1) im Anschluss daran und gegenüber der Einlassöffnung (2) seinen kleinsten Querschnitt aufweist und sich ab diesem kleinsten Querschnitt in Richtung auf die Austrittsöffnung (4) aufweitet, wobei die Einlassöffnung (2) von einer ringförmigen Zuführöffnung (15) für Druckgas begrenzt wird, die mit der Druckgasleitung (17) verbunden ist, und dass eine Zuführleitung (7) für die Masse, die die Masse von einem Vorratsbehälter (8) zum Strömungskanal (1) leitet, in einem Bereich mündet, in dem der Strömungskanal (1) Unterdruck erzeugt, wobei sich der Bereich von einem Abstand vor der Einlassöffnung (2) bis in den Strömungskanal (1) erstreckt, **dadurch gekennzeichnet, dass** zusätzlich Druckgas und/oder Masse durch zumindest eine zweite Zuführungsleitung (26) in den Strömungskanal (1) gedrückt wird.

10. Verfahren nach Anspruch 9, **dadurch gekennzeichnet, dass** die Zuführleitung (7) für die Masse, die die Masse von einem Vorratsbehälter (7) zum Strömungskanal (1) leitet, relativ zum Strömungskanal (1) verschieblich geführt und in einer Stellung festgelegt wird, und/oder die Stellung der Mündung der Zuführleitung (7) abhängig vom Druck und/oder von der Geschwindigkeit und/oder dem Massestrom der aus der Zuführleitung (7) austretenden Masse oder von der Förderrate einer Fördereinrichtung, die zur Förderung der Masse durch die Zuführleitung (7) eingerichtet ist, gesteuert ist.

11. Verfahren nach einem der Ansprüche 9 bis 10, **dadurch gekennzeichnet, dass** sich der Bereich, in dem die Mündung der Zuführleitung (7) positioniert ist, von einem Abstand vor der Einlassöffnung (2) bis zu einer Zuführöffnung für Druckgas an dem oder in dem Strömungskanal (1) erstreckt, oder sich von der Zuführöffnung für Druckgas an dem oder in dem Strömungskanal bis zur Austrittsöffnung (4) erstreckt.

12. Verfahren nach einem der Ansprüche 9 bis 11, **dadurch gekennzeichnet, dass** der Strömungskanal (1) zumindest eine angeschlossene Druckgasleitung (17) aufweist, die mittels eines Ventils (27) gesteuert ist und an oder in dem Strömungskanal (1) in zumindest einer Zuführöffnung (15) für Druckgas mündet, die in dem Strömungskanal (1) eine Luftströmung von der Einlassöffnung (2) zur gegenüberliegenden Austrittsöffnung (4) ausbildet.

13. Verfahren nach einem der Ansprüche 9 bis 12, **dadurch gekennzeichnet, dass** das Ventil (27) in der Druckgasleitung (17) abhängig vom Signal eines Detektors für die Stellung eines Lebensmittels auf der Transporteinrichtung (23) für Lebensmittel gesteuert ist.

14. Verfahren nach einem der Ansprüche 9 bis 13, **dadurch gekennzeichnet, dass** an dem Ende der Zuführleitung (7), das deren Mündung gegenüberliegt, ein Vorratsbehälter (8) für die Masse angeschlossen ist und die Masse mittels einer Fördereinrichtung zu der Mündung gefördert wird, wobei als Fördereinrichtung in der Zuführleitung (7) eine Pumpe (9) angeordnet ist und/oder als Fördereinrichtung der Vorratsbehälter (8) mit Druckgas beaufschlagt ist oder eine Wand des Vorratsbehälters (8) als ein gegen das Innenvolumen des Vorratsbehälters (8) belasteter Kolben ausgebildet ist und in der Zuführleitung (7) ein gesteuertes Ventil (11) angeordnet ist.

15. Verfahren nach einem der Ansprüche 9 bis 14, **dadurch gekennzeichnet, dass** ein Leitelement (18) in einem radialen Abstand den Strömungskanal (1) an dessen Austrittsöffnung (4) umfasst, wobei das Leitelement (18) sich koaxial zur Längsmittelachse des Strömungskanals (1) erstreckt, und zwischen dem Leitelement (18) und dem Strömungskanal (1) ein Hüllstrom um den Strom aus Gas und Masse gebildet wird, der aus der Austrittsöffnung (4) tritt, und dass das Leitelement (18) mit einer Einrichtung zur Beaufschlagung mit Druckgas verbunden ist, die eine Gasströmung zwischen dem Leitelement (18) und dem Strömungskanal (1) in Richtung von der Einlassöffnung (2) zur Austrittsöffnung (4) ausbildet.
